# EUROPEAN PATENT APPLICATION

(11) **EP 4 432 736 A1**
(43) Date of publication of application: **18.09.2024**
(21) Application number: 21963033.2
(22) Date of filing: 08.11.2021
(51) Int. Cl.: H04W 48/16

(54) **PAGING FILTERING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2021/129390
(87) International publication number: WO 2023/077524

(57) **Abstract**

Embodiments of the present disclosure provide a paging restriction method and apparatus, a communication device and a storage medium. The paging restriction method is executed by a UE, and comprises: sending indication information, the indication information indicating whether the UE receives a paging message triggered by control plane signaling. In this way, a network side can know whether the UE is willing and/or able to receive the paging message triggered by the control plane signaling, so that the network side can accurately determine whether to send the paging message triggered by the control plane signaling.

## Description

### TECHNICAL FIELD

The present disclosure relates to, but is not limited to, the field of communication technologies, and particularly to a method and an apparatus for paging restriction, a communication device and a storage medium.

### BACKGROUND

With development of communication technology, some user equipments (UEs) may have a plurality of subscriber identity module (SIM) cards, and these SIM cards may be signed by a same communication operator, or may be signed by different communication operators.

These SIM cards may be mainly responsible for different services. According to equipment configuration, some SIM cards are mainly responsible for a telephone service, and some SIM cards are mainly responsible for a data service. When one of the SIM cards enters into an idle state, other SIM cards of a communication terminal enter into a connection state to provide a communication service. If other SIM card enables a paging restriction (PR) mechanism, a network cannot deliver some network parameters or configuration parameters, such as, a signaling related to mobility management, steering of roaming (SoR) information, policy parameters and subscription information etc. As such, it may render the UE unable to update the corresponding parameters, caused the UE using outdated or unupdated parameters, resulting in failed service initiations.

### SUMMARY

Embodiments of the present disclosure provide a method and an apparatus for paging restriction, a communication device and a storage medium.

According to a first aspect of the present disclosure, a method for paging restriction is provided. The method is performed by a user equipment (UE) and includes:
sending indication information indicating whether the UE receives a paging message triggered by a control plane signaling.

According to a second aspect of the present disclosure, a method for paging restriction is provided. The method is performed by a network device and includes:
receiving indication information indicating whether a user equipment (UE) receives a paging message triggered by a control plane signaling.
determining whether to initiate the paging message triggered by the control plane signaling based on the indication information.

According to a third aspect of the present disclosure, an apparatus for paging restriction is provided. The apparatus is applied to a user equipment (UE) and includes:
a sending module, configured to send indication information indicating whether the UE receives a paging message triggered by a control plane signaling.

According to a fourth aspect of the present disclosure, an apparatus for paging restriction is provided. The apparatus is applied to a network device and includes:
a receiving module, configured to receive indication information indicating whether a user equipment (UE) receives a paging message triggered by a control plane signaling; and
a processing module, configured to determine whether to initiate the paging message triggered by the control plane signaling based on the indication information.

According to a fifth aspect of the present disclosure, a communication device is provided. The communication device includes:
a processor; and
a memory for storing instructions executable by the processor;
in which the processor is configured to implement the method for paging restriction as described in any embodiment of the present disclosure when running the executable instructions.

According to a sixth aspect of embodiments of the present disclosure, a computer storage medium storing a computer executable program is provided. When the executable program is executed by a processor, the method for paging restriction as described in any embodiment of the present disclosure is implemented.

The solution provided in an embodiment of the present disclosure may include the following beneficial effects.

In embodiments of the present disclosure, the indication information is sent by the UE, the indication information indicates whether the UE receives the paging message triggered by the control plane signaling. In this way, it may render a network side to know whether the UE is prepared to receive and/or ability to receive the paging message triggered by the control plane signaling, further render the network side to accurately determine whether to send the paging message triggered by the control plane signaling. On one hand, it may reduce a probability of an occurrence that service initiation is failed caused by using outdated or unupdated signaling or system parameters due to the UE missing the paging message triggered by the control plane signaling, so that the UE may obtain an updated signaling or system parameters in time, improve a success rate of service initiation; on the other hand, it may reduce a waste of power consumption of the UE to monitor the paging message triggered by the control plane signaling that is prepared to or ability to listen, which may save an energy consumption of the UE.

It should be noted that, the details above and in the following are exemplary and illustrative, and do not constitute the limitation on the present disclosure.

### BRIEF DESCRIPTION OF THE DRAWINGS

FIG. 1 is a structural diagram illustrating a wireless communication system.
FIG. 2 is a flowchart illustrating a method for paging restriction according to an example embodiment.
FIG. 3 is a flowchart illustrating a method for paging restriction according to an example embodiment.
FIG. 4 is a flowchart illustrating a method for paging restriction according to an example embodiment.
FIG. 5 is a flowchart illustrating a method for paging restriction according to an example embodiment.
FIG. 6 is a flowchart illustrating a method for paging restriction according to an example embodiment.
FIG. 7 is a block diagram illustrating an apparatus for paging restriction according to an example embodiment.
FIG. 8 is a block diagram illustrating an apparatus for paging restriction according to an example embodiment.
FIG. 9 is a block diagram illustrating a UE according to an example embodiment.
FIG. 10 is a block diagram illustrating a base station according to an example embodiment.

### DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

The terms described in the present disclosure are only for the purpose of describing specific embodiments and are not intended to limit the present disclosure. The singular forms "a", "the" and "said" used in the disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in this disclosure to describe various information, such information shall not be limited to these terms. These terms are only used to distinguish the same category of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determining".

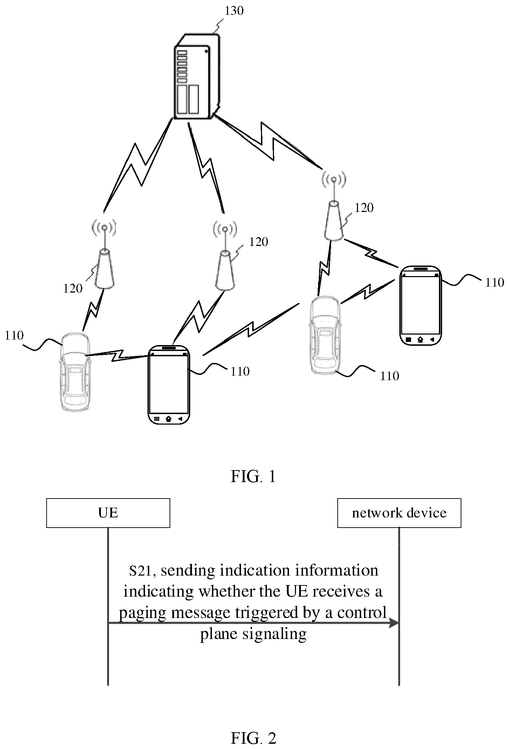

FIG. 1 is a structural diagram illustrating a wireless communication system according to embodiments of the present disclosure. As illustrated in FIG. 1, the wireless communication system is a communication system based on a mobile communication technology. The wireless communication system may include several user equipments (UEs) 110 and several base stations 120.

The UE 110 may refer to a device that provides voice and/or data connectivity for a user. The UE 110 may communicate with one or more core networks via a radio access network (RAN), which may be an internet of things user equipment, for example, a sensor device, a mobile phone and a computer having an internet of things user equipment, for example, may be a fixed, portable, compact, handheld, computer built-in or vehicle apparatus. For example, a station (STA), a subscriber unit, a subscriber station, a mobile station, a mobile, a remote station, an access point, a remote terminal, an access terminal, an access terminal, a user terminal, a user agent, a user device or a user equipment (UE). Alternatively, the UE 110 may be a device of an unmanned vehicle. Alternatively, the UE 110 may be a vehicle device, and for example, may be a vehicle computer with a wireless communication function, or a wireless user equipment externally connected to a vehicle computer. Alternatively, the user equipment 110 also may be a roadside device, and for example, may be a street lamp, a signal lamp or other roadside device with a wireless communication function.

The base station 120 may be a network side device in a wireless communication system. The wireless communication system may be a fourth generation (4G) mobile communication system, also referred to as a long term evolution (LTE) system; or the wireless communications system may be a 5G system, also referred to as a new radio (NR) system or a 5G NR system. Alternatively, the wireless communication system also may be a next generation system of a 5G system. An access network in a 5G system may be referred to as a new generation-radio access network (NG-RAN).

The base station 120 may be an eNB adopted in a 4G system. Alternatively, the base station 120 may be a base station with a centralized distributed architecture (gNB) in a 5G system. When the base station 120 adopts a centralized distributed architecture, it generally includes a central unit (CU) and at least two distributed units (DU). Protocol stacks at a Packet Data Convergence Protocol (PDCP) layer, a Radio Link Control (RLC) layer and a Media Access Control (MAC) layer are configured in a CU; a physical (PHY) layer protocol is configured in a DU. The specific implementation of a base station 120 is not limited in embodiments of the disclosure.

The base station 120 may establish a wireless connection with the UE 110 through a radio interface. In different implementations, the radio interface is a radio interface based on a 4G standard; or, the radio interface is a radio interface based on a 5G standard, and for example, the radio interface is a new radio interface; or, the radio interface may be a radio interface based on a next generation mobile communication network technology standard of a 5G.

In some embodiments, an end to end (E2E) connection further may be established between UEs 110. For example, it is applicable to scenarios such as vehicle to vehicle (V2V) communication, vehicle to infrastructure (V2I) communication and vehicle to pedestrian (V2P) communication in vehicle to everything (V2X).

The above UEs may be referred to as terminal devices in the following embodiments.

In some embodiments, the wireless communication system may further include a network management device 130.

Several base stations 12 are respectively connected to the network management device 130. The network management device 130 may be a core network device in a wireless communication system, and for example, the network management device 130 may be a mobility management entity (MME) in an evolved packet core (EPC). Alternatively, the network management device may be other core network devices, and for example, a Serving GateWay (SGW), a Public Data Network GateWay (PGW), a Policy and Charging Rules Function (PCRF) or a Home Subscriber Server (HSS), etc. The implementation form of the network management device 130 is not limited in embodiments of the disclosure.

For convenience of understanding by those skilled in the art, the technical solution in embodiments of the present disclosure is described clearly in combination with attached drawings in embodiments of the present disclosure. Those skilled in the art may understand that, a plurality of embodiments provided in embodiments of the disclosure may be executed independently or executed in combination with the method in other embodiments of the disclosure, or may be executed independently or executed with some methods in the other related art after combination, which are not be limited in embodiments of the disclosure.

In order to better understand the technical solution as described in any one embodiment of the disclosure, a partial explanation of paging restriction (PR) mechanism in related art is provided first.

In an embodiment, a network restricts a paging message according to a paging restriction rule sent by a UE. Restricting the paging message by the paging restriction rule includes one of:
restricting all paging messages (all paging is restricted);
restricting paging messages other than a paging message triggered by a voice service (all paging is restricted, except paging for voice service (IMS voice));
restricting paging messages other than a paging message triggered by a specific protocol data unit (PDU) session (all paging is restricted, except for certain PDU Session(s));
restricting paging messages other than a paging message triggered by the voice service and the specific PDU session (all paging is restricted, except paging for voice service (IMS voice) and certain PDU session(s)).

In this solution, as long as the PR mechanism is enabled, the network side cannot deliver some important signalings or configuration parameters. Therefore, if one desires to avoid this problem, disabling the PR mechanism is the sole recourse.

As illustrated in FIG. 2, an embodiment of the present disclosure provides a method for paging restriction, performed by a UE. The method includes:

At step S21: indication information is sent. The indication information indicates whether the UE receives a paging message triggered by a control plane signaling.

In an embodiment, the UE may be various types of UEs. For example, the UE may be, but is not limited to, a mobile phone, a tablet computer, a wearable device, a smart home device, a smart office device, a wearable device, a game control platform or a multimedia equipment, etc.

In an embodiment, the UE may include one or more SIM cards. The SIM card may be a physical card, or an electronic SIM card, namely an eSIM card.

Sending the indication information in step S21 may be: sending the indication information to a network device. Here, the network device may be a core network device or an access network device. The core network device may be, but is not limited to, an access management function (AMF), unified data management (UDM), or a policy control function (PCF). The access network device may be, but is not limited to, a base station.

Sending the indication information in step S21 may be sending a request message carrying the indication information. For example, the UE sends a registration request message carrying the indication information. In another example, the UE sends a service request message carrying the indication information. In this way, sending of the request message may realize the registration request and a function of informing the network whether the UE receives the paging message triggered by the control plane signaling, or the service request and a function of informing the network whether the UE receives the paging message triggered by the control plane signaling. Thus, a utilization rate of request messages may be improved.

In some embodiments, the indication information indicates a willingness and/or an ability of the UE to receive the paging message triggered by the control plane signaling. Here, the willingness includes a willingness to agree or disagree. The ability includes an ability to be capable or incapable.

Here, the willingness of the UE to receive the paging message triggered by the control plane signaling may be determined based on an idleness of the UE and/or a restriction mechanism negotiated between the UE and the network side. Here, the idleness of the UE may be, but is not limited to, a CPU utilization of the UE, a power consumption of the UE, and a number of communications with other devices.

In an embodiment, in a case that the paging message triggered by the control plane signaling is a paging message with the PR mechanism that is negotiated between the UE and the network side, it is determined that the UE has a willingness to receive the paging message.

In another embodiment, in a case that the CPU utilization of the UE is less than a predetermined threshold and/or a number of devices communicating with the UE is less than a predetermined number, it is determined that the UE has a willingness to receive the paging message.

Of course, in other embodiments, the willingness of the UE to receive the paging message triggered by the control plane can also be determined in other situations, for example, based on a type of the paging message, or based on a remaining power of the UE, etc.; the above is only an example for illustrating how to determine the willingness of the UE to receive the paging message triggered by the control plane, which is not limited.

Illustratively, the indication information indicates that the UE has a willingness to receive and has an ability to receive the paging message triggered by the control plane signaling; or the indication information indicates that the UE has a willingness to but has an inability to receive the paging message triggered by the control plane signaling; or the indication information indicates that the UE has an unwillingness to receive but has an ability to receive the paging message triggered by the control plane signaling; or the indication information indicates that the UE has an unwillingness receive and has an inability to receive the paging message triggered by the control plane signaling. In a case that the UE has the willingness to receive and has the ability to receive the paging message triggered by the control plane signaling, the network side initiates the paging message triggered by the control plane signaling. In a case that the UE has an unwillingness to receive and has an inability to receive the paging message triggered by the control plane signaling, the network side does not initiate the paging message triggered by the control plane signaling. In a case that the UE has the willingness to receive but has the inability to receive, or the UE has the unwillingness to receive but has the ability to receive, one case is that the network side initiates the paging message triggered by the control plane signaling, and the other case is that the network side does not initiate the paging message triggered by the control plane signaling.

Illustratively, the indication information includes one or more predetermined bits. For example, when the predetermined bit is a first value, it indicates to receive the paging message triggered by the control plane signaling, and when the predetermined bit is a second value, it indicates not to receive the paging message triggered by the control plane signaling.

Illustratively, the indication information includes a plurality of predetermined bits. For example, when a first predetermined bit of the indication information is a first value, it indicates the willingness to receive the paging message triggered by the control plane signaling; when the first predetermined bit is a second value, it indicates the unwillingness to receive the paging message triggered by the control plane signaling. When a second predetermined bit of the indication information is a first value, it indicates the ability to receive the paging message triggered by the control plane signaling; when the second predetermined bit is a second value, it indicates the inability to receive the paging message triggered by the control plane signaling.

In some embodiments, the indication information indicates whether the UE has a willingness to receive the paging message triggered by the control plane signaling, or indicates whether the UE has an ability to receive the paging message triggered by the control plane signaling.

In some embodiments, the paging message triggered by the control plane signaling may include a paging message triggered by a system parameter update.

The paging message triggered by the system parameter update includes but not limited to at least one of the following a paging message triggered by a policy parameter update; a paging message triggered by a configuration parameter update; a paging message triggered by a subscription information update.

Of course, the paging message triggered by the control plane signaling may also be a paging message triggered by other situations, for example, may be a paging message triggered by a positioning management information update, or a paging message triggered by a mobility management information update.

Of course, the paging message triggered by the control plane signaling may also be a paging message triggered by a voice service and/or caused by a specific PDU session.

The above are only examples of the paging message triggered by the control plane signaling, and do not limit specific types of control plane signaling.

In an embodiment, the paging message triggered by the system parameter update is a paging message triggered by a system update.

In embodiments of the present disclosure, the indication information is sent by the UE, the indication information indicates whether the UE receives the paging message triggered by the control plane signaling. In this way, it may render a network side to know whether the UE is prepared to receive and/or ability to receive the paging message triggered by the control plane signaling, further render the network side to accurately determine whether to send the paging message triggered by the control plane signaling. On one hand, it may reduce a probability of an occurrence that service initiation is failed caused by using outdated or unupdated signaling or system parameters due to the UE missing the paging message triggered by the control plane signaling, so that the UE may obtain an updated signaling or system parameters in time, improve a success rate of service initiation; on the other hand, it may reduce a waste of power consumption of the UE to monitor the paging message triggered by the control plane signaling that is prepared to or ability to listen, which may save an energy consumption of the UE.

An embodiment of the present disclosure provides a method for paging restriction, including sending indication information, the indication information including system signaling indication (system signaling allowed indication) information. The system signaling indication information indicates whether to receive a paging message triggered a control plane signaling.

In some embodiments, the system signaling indication information indicates at least one of: whether to receive a paging message triggered by a policy parameter update; whether to receive a paging message triggered by a configuration parameter update; and whether to receive a paging message triggered by a subscription information update.

Here, whether to receive the paging message triggered by the policy parameter update includes: having a willingness to receive or having an unwillingness to receive the paging message triggered by the policy parameter update; and/or having an ability to receive or having an inability to receive the paging message triggered by the policy parameter update.

Here, whether to receive the paging message triggered by the configuration parameter update includes: having a willingness to receive or having an unwillingness to receive the paging message triggered by the configuration parameter update; and/or having an ability to receive or having an inability to receive the paging message triggered by the configuration parameter update.

Here, whether to receive the paging message triggered by the subscription information update includes: having a willingness to receive or having an unwillingness to receive the paging message triggered by the subscription information update; and/or having an ability to receive or having an inability to receive the paging message triggered by the subscription information update.

In this way, an embodiment of the present disclosure may newly define a system signaling indication information to indicate a willingness and/or an ability of the UE to receive the paging message triggered by the control plane signaling such as the policy parameter update, the configuration parameter update, and/or the subscription information update. In this way, when the UE sends the system signaling indication information to the network side, it informs the network side of the willingness and/or the ability of the UE to receive the paging messages triggered by these control plane signalings. Therefore, the network side may accurately determine whether to initiate the paging message triggered by the control plane signaling.

An embodiment of the present disclosure provides a method for paging restriction, including: sending indication information, where the indication information includes first PR information. The first PR information indicates receiving a paging message triggered by a control plane signaling.

In some embodiments, the first PR information indicates that the UE has a willingness to receive or an ability to receive the paging message triggered by the control plane signaling.

In some embodiments, the first PR information indicates at least one of:
having a willingness to receive or having an ability to receive a paging message triggered by a voice service;
having a willingness to receive or having an ability to receive a paging message triggered by a specific PDU session;
having a willingness to receive or having an ability to receive a paging message triggered by the voice service and the specific PDU session; or
having a willingness to receive or having an ability to receive a paging message indicated to be received by system signaling indication information.

The paging message indicated to be received by the system signaling indication information includes: a willingness to receive or an ability to receive a paging message triggered by a policy parameter indicated by the system signaling indication information, a willingness to receive or an ability to receive a paging message triggered by a configuration parameter update indicated by the system signaling indication information, and/or a willingness to receive or an ability to receive a paging message triggered by a subscription information update indicated by the system signaling indication information.

In this way, an embodiment of the present disclosure may newly define a new PR information (namely the first PR information), indicating that the UE has the willingness to receive or has the ability to receive the paging message triggered by the voice service and/or the specific PDU session, and/or indicating that the UE has the willingness to receive or has the ability to receive the paging message indicated by the system signaling indication information. In this way, when the UE sends the first PR information to the network side, it informs the network side that the UE may receive these paging messages, so that the network side initiates these paging messages; or, when the UE does not send the first PR information to the network side, it informs the network side that the UE cannot receive these paging messages, so that the network side does not initiate these paging messages.

An embodiment of the present disclosure provides a method for paging restriction, including: sending indication information, where the indication information includes second PR information. The second PR information indicates whether the UE receives a paging message triggered by a control plane signaling.

In some embodiments, the second PR information indicates whether the UE has a willingness to receive the paging message triggered by the control plane signaling, or indicates whether the UE has an ability to receive the paging message triggered by the control plane signaling.

In some embodiments, the second PR information indicates at least one of:
having a willingness to receive or having an unwillingness to receive all paging messages;
having an ability to receive or having an inability to receive all paging messages;
having a willingness to receive or having an unwillingness to receive a paging message triggered by a voice service;
having an ability to receive or having an inability to receive the paging message triggered by the voice service;
having a willingness to receive or having an unwillingness to receive a paging message triggered by a PDU session;
having an ability to receive or having an inability to receive the paging message triggered by the PDU session;
having a willingness to receive or having an unwillingness to receive a paging message triggered by the voice service and the PDU session;
having an ability to receive or having an inability to receive the paging message triggered by the voice service and the PDU session;
having a willingness to or having an ability to receive a paging message indicated to be received by system signaling indication information;
having an unwillingness to receive or having an inability to receive the paging message indicated not to be received by the system signaling indication information.

The paging message indicated not to be received by the system signaling indication information includes: a paging message triggered by a policy parameter update that is indicated to be unwillingness to receive or inability to receive by the system signaling indication information; a paging message triggered by a configuration parameter update that is indicated to be unwillingness to receive or inability to receive by the system signaling indication information; and/or a paging message triggered by a subscription information update that is indicated to be unwillingness to receive or inability to receive by the system signaling indication information.

In some embodiments, the second PR information may include: a first indication value indicating to receive the paging message triggered by the control plane signaling; or a second indication value indicating to receive no paging message triggered by the control plane signaling.

In some embodiments, the second PR information may include: a first indication value indicating a willingness or an ability to receive the paging message triggered by the control plane signaling; or a second indication value indicating an unwillingness or an inability to receive the paging message triggered by the control plane signaling.

In an embodiment, the first indication value may be the first value in the above embodiment; the second indication value may be the second value in the above embodiment.

In this way, an embodiment of the present disclosure may newly define a piece of PR information (that is, the second PR information) to indicate the willingness and/or ability of the UE to receive the paging message triggered by the voice service and/or the specific PDU session, and/or, indicate the willingness and/or ability of the UE having the willingness to receive or having the ability to receive the paging message indicated by the system signaling indication information. In this way, the UE informs the network side of the willingness and/or ability of the UE to receive the paging messages when sending the second PR information to the network side, so that the network side can accurately determine whether to initiate the paging messages. Moreover, when the second PR information includes the first indication value, it can inform the network side that the UE has the willingness or has the ability to receive the paging message triggered by the voice service and/or the specific PDU session, and/or the paging message triggered by the received control plane signaling indicated to be received by the system signaling indication information, so that the network side may initiate these paging messages; or, when the second PR information includes the second indication value, it can inform the network side of the unwillingness or inability to receive the paging messages, so that the network side does not initiate these paging messages.

It should be noted that those skilled in the art can understand that any method provided in embodiments of the present disclosure may be executed independently, or together with some methods in embodiments of the present disclosure or some methods in related arts.

The following method for paging restriction is performed by a network device, which is similar to description of the above method for paging restriction performed by the UE. For details that are not disclosed in embodiments of the method for paging restriction performed by the network device, please refer to the description of examples of the method for paging restriction performed by the UE, and no detailed description will be given here.

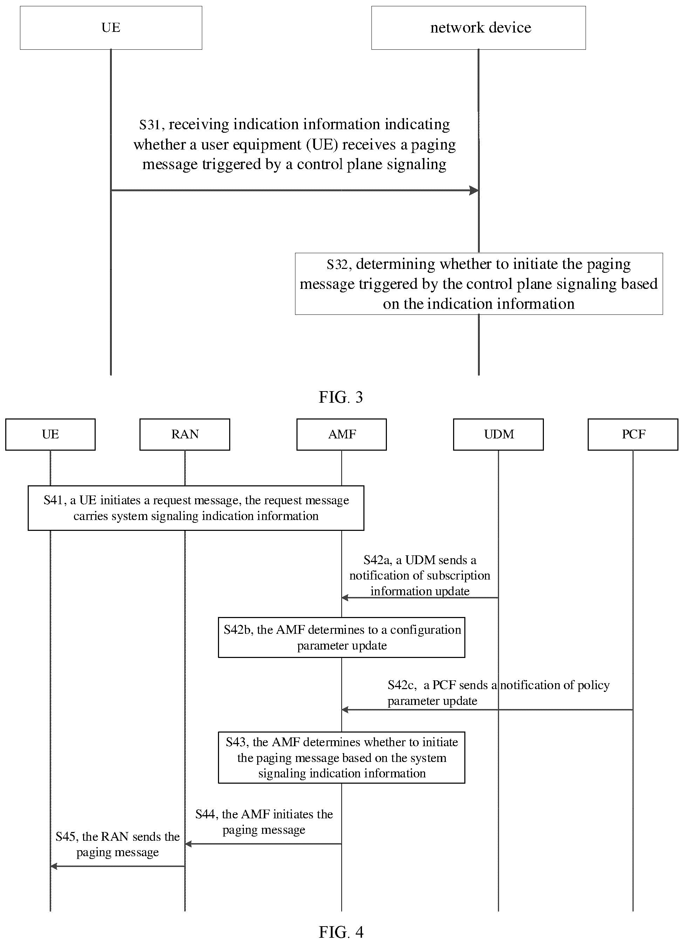

As illustrated in FIG. 3, an embodiment of the present disclosure provides a method for paging restriction, performed by a network device. The method includes following steps.

Step S31: indication information is received. The indication information indicates whether a UE receives a paging message triggered by a control plane signaling;

Step S32: it is determined whether to initiate the paging message triggered by the control plane signaling based on the indication information.

Here, the network device may be a core network device or an access network device. The core network device may be, but is not limited to, an AMF. The access network device may be, but is not limited to, a base station.

In some embodiments of the present disclosure, the indication information may be the indication information in step S21; the system signaling indication information may be the system signaling indication information in the above embodiment; the first PR information is the first PR information in the above embodiment; the second PR information is the second PR information in the above embodiment.

In some embodiments of the present disclosure, receiving the paging message triggered by the control plane signaling may be: a willingness to receive the paging message triggered by the control plane signaling, or an ability to receive the paging message triggered by the control plane signaling, or the willingness to receive and the ability to receive the paging message triggered by the control plane signaling.

In some embodiments of the present disclosure, receiving no paging message triggered by the control plane signaling may be: an unwillingness to receive the paging message triggered by the control plane signaling, or inability to receive the paging message triggered by the control plane signaling, or the unwillingness to receive and the inability to receive the paging message triggered by the control plane signaling.

In an embodiment, in a case that the network device is the AMF, the AMF may store the indication information.

Receiving the indication information in step S31 may be receiving indication information sent by the UE.

Receiving the indication information in step S31 may be: receiving a request message carrying the indication information. For example, the network device receives a registration request message carrying the indication information. In another example, the network device receives a service request message carrying the indication information.

In some embodiments, the indication information indicates whether the UE has a willingness to receive the paging message triggered by the control plane signaling, or indicates whether the UE has an ability to receive the paging message triggered by the control plane signaling.

An embodiment of the present disclosure provides a method for paging restriction, which is performed by a network device. The method may include: receiving the indication information, the indication information including system signaling indication information. The system signaling indication information indicates whether to receive a paging message triggered by a parameter update.

Step S32 may include: determining to initiate the paging message triggered by the control plane signaling based on the system signaling indication information indicating that the UE receives the paging message triggered by the control plane signaling; or determining to initiate no paging message triggered by the control plane signaling based on the system signaling indication information indicating that the UE receives no paging message triggered by the control plane signaling.

An embodiment of the present disclosure provides a method for paging restriction, which is performed by a network device. The method may include one of:
determining to initiate the paging message triggered by the control plane signaling based on the system signaling indication information indicating that the UE receives the paging message triggered by the control plane signaling; or
determining to initiate no paging message triggered by the control plane signaling based on the system signaling indication information indicating that the UE receives no paging message triggered by the control plane signaling.

An embodiment of the present disclosure provides a method for paging restriction, which is performed by a network device. The method may include one of:
determining to initiate the paging message triggered by the control plane signaling based on the system signaling indication information indicating that the UE has a willingness to receive or has an ability to receive the paging message triggered by the control plane signaling; or
determining to initiate no paging message triggered by the control plane signaling based on the system signaling indication information indicating that the UE has an unwillingness to receive or has an inability to receive the paging message triggered by the control plane signaling.

An embodiment of the present disclosure provides a method for paging restriction, which is performed by a network device. The method may include at least one of:
determining to initiate a paging message triggered by a policy parameter update based on the system signaling indication information indicating that the UE has a willingness to receive or is has an ability to receive the paging message triggered by the policy parameter update;
determining to initiate no paging message triggered by the policy parameter update based on the system signaling indication information indicating that the UE has an unwillingness to receive or has an inability to receive the paging message triggered by the policy parameter update;
determining to initiate a paging message triggered by a configuration parameter update based on the system signaling indication information indicating that the UE has a willingness to receive or has an ability to receive the paging message triggered by the configuration parameter update;
determining to initiate no paging message triggered by the configuration parameter update based on the system signaling indication information indicating that the UE has an unwillingness to receive or has an inability to receive the paging message triggered by the configuration parameter update;
determining to initiate a paging message triggered by a subscription information update based on the system signaling indication information indicating that the UE has a willingness to receive or has an ability to receive the paging message triggered by the subscription information update; or
determining to initiate no paging message triggered by the subscription information update based on the system signaling indication information indicating that the UE has an unwillingness to receive or has an inability to receive the paging message triggered by the subscription information update.

Step S32 may include: determining to initiate the paging message triggered by the control plane signaling based on the indication information comprising first paging restriction (PR) information; or determining to initiate no paging message triggered by the control plane signaling based on the indication information comprising no first PR information.

An embodiment of the present disclosure provides a method for paging restriction, which is performed by a network device. The method may include: receiving indication information, where the indication information includes first PR information. The first PR information indicates receiving a paging message triggered by a control plane signaling. Of course, in other embodiments, the indication information may not include the first PR information.

An embodiment of the present disclosure provides a method for paging restriction, which is performed by a network device. The method may include one of:
determining to initiate the paging message triggered by the control plane signaling based on the indication information comprising first paging restriction (PR) information; or
determining to initiate no paging message triggered by the control plane signaling based on the indication information comprising no first PR information.

Step S32 may include at least one of:
determining to initiate a paging message triggered by a voice service based on first PR information indicating a willingness to receive or an ability to receive the paging message triggered by the voice service;
determining to initiate a paging message triggered by a specific PDU session based on first PR information indicating a willingness to receive or an ability to receive the paging message triggered by the specific PDU session; or
determining to initiate a paging message triggered by the voice service and the specific PDU session based on first PR information indicating a willingness to receive or an ability to receive the paging message triggered by the voice service and the specific PDU session.

An embodiment of the present disclosure provides a method for paging restriction, which is performed by a network device. The method may include at least one of:
determining to initiate a paging message triggered by a voice service based on first PR information indicating a willingness to receive or an ability to receive the paging message triggered by the voice service;
determining to initiate a paging message triggered by a specific PDU session based on first PR information indicating a willingness to receive or an ability to receive the paging message triggered by the specific PDU session; or
determining to initiate a paging message triggered by the voice service and the specific PDU session based on first PR information indicating a willingness to receive or an ability to receive the paging message triggered by the voice service and the specific PDU session.

An embodiment of the present disclosure provides a method for paging restriction, which is performed by a network device. The method may include receiving indication information, the indication information including second PR information. The second PR information indicates whether a UE receives a paging message triggered by a control plane signaling.

Step S32 may be: determining to initiate the paging message triggered by the control plane signaling based on the second PR information indicating a willingness or an ability to receive the paging message triggered by control plane signaling; determining to initiate no paging message triggered by the control plane signaling based on the second PR information indicating an unwillingness or an inability to receive the paging message triggered by the control plane signaling.

Step S32 may include: determining to initiate the paging message triggered by the control plane signaling based on second PR information comprising a first indication value, in which the first indication value indicates that the UE receives the paging message triggered by the control plane signaling; or determining to initiate no paging message triggered by the control plane signaling based on the second PR information comprising a second indication value, in which the second indication value indicates that the UE receives no paging message triggered by the control plane signaling.

The first indication value indicates that the UE has a willingness to receive or has an ability to receive the paging message triggered by the control plane signaling; the second indication value indicates that the UE has an unwillingness to receive or has an inability to receive the paging message triggered by the control plane signaling.

An embodiment of the present disclosure provides a method for paging restriction, which is performed by a network device. The method may include at least one of:
determining to initiate a paging message that is a paging message triggered by a voice service based on second PR information indicating a willingness to receive or an ability to receive the paging message triggered by the voice service;
determining to initiate no paging message that is the paging message triggered by the voice service based on second PR information indicating an unwillingness to receive or an inability to receive the paging message that is the paging message triggered by the voice service;
determining to initiate a paging message triggered by a PDU session based on second PR information indicating a willingness to receive or an ability to receive the paging message triggered by a specific PDU session;
determining to initiate no paging message triggered by the PDU session based on second PR information indicating an unwillingness to receive or an inability to receive the paging message triggered by the PDU session;
determining to initiate a paging message triggered by the voice service and the specific PDU session based on second PR information indicating a willingness to receive or an ability to receive the paging message triggered by the voice service and the specific PDU session;
determining to initiate no paging message triggered by the voice service and the specific PDU session based on second PR information indicating an unwillingness to receive or an inability to receive the paging message triggered by the voice service and the specific PDU session;
determining to initiate a paging message indicated by the system signaling indication information to be received based on second PR information indicating a willingness to receive or an ability to receive the paging message indicated to be received by the system signaling indication information; or
determining to initiate no paging message indicated not to be received by the system signaling indication information based on second PR information indicating an unwillingness to receive or an inability to receive the paging message indicated not to be received by the system signaling indication information.

The above implementations may be expressed specifically on the UE side, and will not be repeated here.

In the above embodiments, in a case that the network device is an AMF, the AMF may store indication information, for example, system signaling indication information, first PR information, or second PR information. In a case that a UDM sends a notification of subscription information update, a PCF sends a notification of policy parameter update, and/or the AMF determines a configuration parameter update, then the AMF may determine whether to initiate a paging message to the UE based on the stored indication information. In a case that the AMF initiates the paging message, it may include that: the AMF sends the paging message to a radio access network (RAN), and forwards the paging message to the UE through the RAN. Here, the AMF sending the paging message to the RAN may include the AMF sending the paging message to the base station.

It should be noted that those skilled in the art can understand that any method provided by embodiments of the present disclosure may be executed independently, or may be executed together with some methods in embodiments of the present disclosure or some methods in related arts.

In order to further explain any embodiment of the present disclosure, several specific embodiments are provided below.

As illustrated in FIG. 4, an embodiment of the present disclosure provides a method for paging restriction, applied to a communication device. The method may include following steps.

Step S41: a UE initiates a request message. The request message carries system signaling indication information.

In an optional embodiment, the UE sends a registration request message carrying the system signaling indication information or a service request message carrying the system signaling indication information to a RAN and/or an AMF. The system signaling indication information indicates a willingness and/or an ability of receiving a paging message triggered by a control plane information.

Here, the paging message retriggered by the control plane signaling includes: a paging message triggered by a system parameter update.

Here, after receiving the registration request message or the service request message, the AMF stores the system signaling indication information carried in the registration request message or the service request message.

Step S42a: a UDM sends a notification of subscription information update.

In an optional embodiment, the UDM sends the notification of subscription information update to the AMF.

Step S42b: the AMF determines to a configuration parameter update.

Here, the configuration parameter update may refer to a mobility management parameter update.

In an optional embodiment, the AMF determines the mobility management parameter update.

Step S42c: a PCF sends a notification of policy parameter update.

In an optional embodiment, the PCF sends the notification of policy parameter update to the AMF.

Step S43: the AMF determines whether to initiate the paging message based on the system signaling indication information.

In an optional embodiment, the AMF determines to initiate the paging message triggered by the system update in response to determining that the system signaling indication information indicates to receive the paging message triggered by the control plane signaling; or determines not to initiate the paging message triggered by the system update in response to determining that the system signaling indication information indicates not to receive the paging message triggered by the control plane signaling.

Here, the paging message triggered by the control plane signaling may be: a paging message triggered by a subscription information update, a paging message triggered by a configuration parameter update, and/or a paging message triggered by a policy parameter update. For example, the AMF determines to initiate the paging message triggered by the subscription information update in response to determining that the system signaling indication information indicates a willingness or an ability to receive the paging message triggered by the subscription information update. As another example, the AMF determines to initiate the paging message triggered by the subscription information update and the paging message triggered by the policy parameter update paging message in response to determining that the system signaling indication information indicates a willingness or an ability to receive the paging message triggered by the subscription information update and the paging message triggered by the policy parameter update.

Step S44: the AMF initiates the paging message.

In an optional embodiment, the AMF sends the paging message triggered by the control plane signaling to the RAN in response to determining to initiate the paging message triggered by the control plane signaling.

Here, the AMF may send the paging message to the base station of the RAN.

Step S45: the RAN sends the paging message.

In an optional embodiment, the base station of the RAN sends the paging message triggered by the control plane signaling to the UE.

An embodiment of the present disclosure may define a new system signaling indication information, which is used to inform the network side of whether the UE receives the paging message triggered by the control plane signaling, and the network side can accurately determine whether to send the paging message triggered by control plane signaling to the UE when receiving the control plane signaling on the network side. In this way, on one hand, it may reduce a probability of an occurrence that service initiation is failed caused by using outdated or unupdated signaling or system parameters due to the UE missing the paging message triggered by the control plane signaling, so that the UE may obtain an updated signaling or system parameters in time, improve a success rate of service initiation; on the other hand, it may reduce a waste of power consumption of the UE to monitor the paging message triggered by the control plane signaling that is prepared to or ability to listen, which may save an energy consumption of the UE.

It should be noted that those skilled in the art can understand that any method provided in embodiments of the present disclosure may be executed independently, or together with some methods in embodiments of the present disclosure or some methods in related arts.

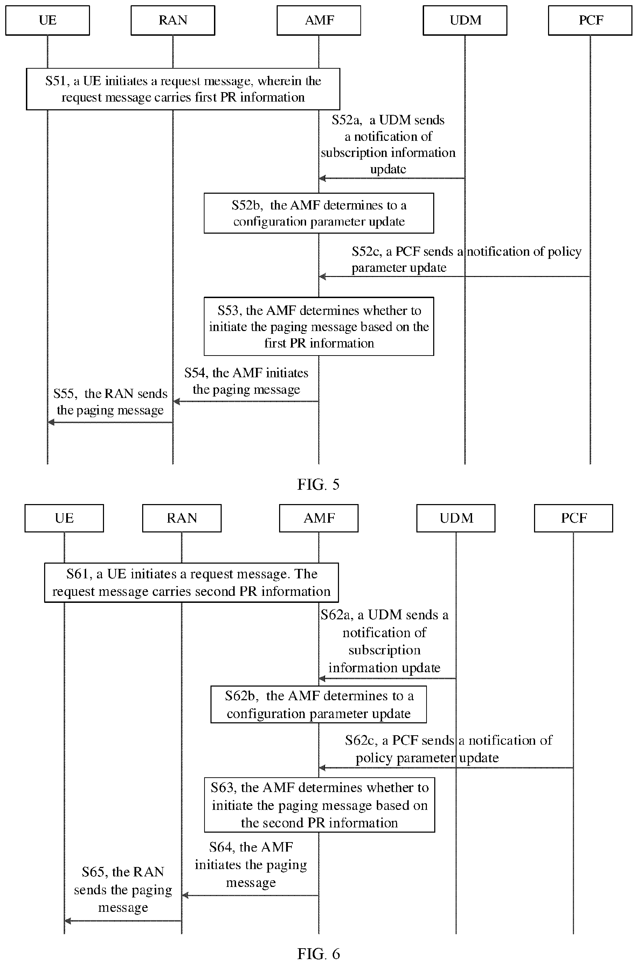

As illustrated in FIG. 5, an embodiment of the present disclosure provides a method for paging restriction, applied to a communication device. The method may include following steps.

Step S51: a UE initiates a request message. The request message carries first PR information.

In an optional embodiment, the first PR information indicates at least one of:
receiving a paging message triggered by a voice service (all paging is restricted, except paging for voice service (IMS voice));
receiving a paging message triggered by a specific PDU sessions (all paging is restricted, except for certain PDU Session(s));
receiving a paging message triggered by the voice service and the specific PDU sessions (all paging is restricted, except paging for voice service (IMS voice) and certain PDU session(s));
receiving a paging message indicated by system signaling indication information (paging for system signaling (e.g., UE parameter update) is enabled).

In an optional embodiment, the UE sends a registration request message carrying the first PR information or a service request message carrying the first PR information to a RAN and/or an AMF. The first PR information indicates a willingness to receive or an ability to receive the paging message triggered by the control plane signaling.

Here, the paging message retriggered by the control plane signaling includes a paging message triggered by a system parameter update.

Here, after receiving the registration request message or the service request message, the AMF stores the first PR information carried in the registration request message or the service request message.

Step S52a: a UDM sends a notification of subscription information update.

In an optional embodiment, the UDM sends the notification of subscription information update to the AMF.

Step S52b: the AMF determines to a configuration parameter update.

Here, the configuration parameter update may refer to a mobility management parameter update.

In an optional embodiment, the AMF determines the mobility management parameter update.

Step S52c: a PCF sends a notification of policy parameter update.

In an optional embodiment, the PCF sends the notification of policy parameter update to the AMF.

Step S53: the AMF determines whether to initiate the paging message based on the first PR information.

In an optional embodiment, the AMF determines to initiate the paging message triggered the system update in response to determining to receive the first PR information; or determines not to initiate the paging message triggered the system update in response to determining not to receive the first PR information.

Here, the paging message triggered by the control plane signaling may be a paging message triggered by a subscription information update, a paging message triggered by a configuration parameter update, and/or a paging message triggered by a policy parameter update. For example, the AMF determines to initiate the paging message triggered by the subscription information update in response to determining that the registration request message or the service request message carries the first PR information and the notification of subscription information update sent by the UDM is received. The AMF determines not to send the paging message triggered by the system update in response to determining that none of the registration request message and the service request message carries the first PR information. For another example, the AMF determines to initiate the paging message triggered by the subscription information update and the policy parameter update in response to determining that the registration request message or the service request message carries the first PR information and the notification of subscription information update sent by the UDM is received and a request message of the policy parameter update sent by the PCF is received. The AMF determines not to send the paging message triggered by the system update in response to determining that none of the registration request message and the service request message carries the first PR information.

Here, the paging message triggered by the control plane signaling may be a paging message triggered by a voice service and/or a specific PDU session. For example, the AMF determines to initiate the paging message triggered by the voice service and/or the specific PDU session in response to determining that the registration request message or the service request message carries the first PR information; determined not to initiate the paging message triggered by the voice service and the specific PDU session in response to determining that none of the registration request message and the service request message carries the first PR information.

In another optional embodiment, the AMF determines whether to initiate the paging message triggered by the system update based on the first PR information and system signaling indication information.

For example, the AMF determines to initiate the paging message triggered by the voice service and/or the specific PDU session caused by the subscription information update in response to determining that the first PR information is received and the system signaling indication information indicates to receive the paging message triggered by the subscription information update.

Step S54: the AMF initiates the paging message.

In an optional embodiment, the AMF sends the paging message triggered by the control plane signaling to the RAN in response to determining to initiate the paging message triggered by the control plane signaling.

Here, the AMF may send the paging message to the base station of the RAN.

Step S55: the RAN sends the paging message.

In an optional embodiment, the base station of the RAN sends the paging message triggered by the control plane signaling to the UE.

An embodiment of the present disclosure may define a new PR information (namely the first PR information), which is used to inform the network side of whether the UE receives the paging message triggered by the control plane signaling, and the network side can accurately determine whether to send the paging message triggered by control plane signaling to the UE when receiving the control plane signaling on the network side. In this way, it may reduce a probability of an occurrence that service initiation is failed caused by using outdated or unupdated signaling or system parameters due to the UE missing the paging message triggered by the control plane signaling, so that the UE may obtain an updated signaling or system parameters in time, improve a success rate of service initiation.

It should be noted that those skilled in the art can understand that any method provided in embodiments of the present disclosure may be executed independently, or together with some methods in embodiments of the present disclosure or some methods in related arts.

As illustrated in FIG. 5, an embodiment of the present disclosure provides a method for paging restriction, applied to a communication device. The method may include following steps.

Step S61: a UE initiates a request message. The request message carries second PR information.

In an optional embodiment, the second PR information indicates at least one of the following:
whether to receive all paging messages (all paging is restricted);
whether to receive a paging message triggered by a voice service (all paging is restricted, except paging for voice service (IMS voice));
whether to receive a paging message triggered by a specific PDU (all paging is restricted, except for certain PDU Session(s));
whether to receive a paging message triggered by the voice service and the specific service (all paging is restricted, except paging for voice service (IMS voice) and certain PDU session(s));
receiving a paging message indicated to be received by system signaling indication information, or receiving no paging message indicated not to be received by the system signaling indication information (paging for system signaling (e.g., UE parameter update) is enabled/disabled).

In an optional embodiment, the UE sends a registration request message carrying the second PR information or a service request message carrying the second PR information to a RAN and/or an AMF. The second PR information indicates a willingness and/or an ability to receive the page message triggered by the control plane signaling.

Here, the paging message retriggered by the control plane signaling includes the paging message triggered by a system parameter update.

Here, after receiving the registration request message or the service request message, the AMF stores the second PR information carried in the registration request message or the service request message.

Step S62a: a UDM sends a notification of subscription information update.

In an optional embodiment, the UDM sends the notification of subscription information update to the AMF.

Step S62b: the AMF determines to a configuration parameter update.

Here, the configuration parameter update may refer to a mobility management parameter update.

In an optional embodiment, the AMF determines the mobility management parameter update.

Step S62c: a PCF sends a notification of policy parameter update.

In an optional embodiment, the PCF sends the notification of policy parameter update to the AMF.

Step S63: the AMF determines whether to initiate the paging message based on the second PR information.

In an optional embodiment, the AMF determines to initiate the paging message triggered by the system update in response to determining that the second PR information includes a first indication value, where the first indication value indicates receiving the paging message triggered by the control plane signaling. The AMF determines to initiate no paging message triggered by the system update in response to determining that the second PR information includes a second indication value, where the second indication value indicates receiving no paging message triggered by the control plane signaling.

Here, the paging message triggered by the control plane signaling may be a paging message triggered by a subscription information update, a paging message triggered by a configuration parameter update, and/or a paging message triggered by a policy parameter update. For example, the AMF determines to initiate the paging message triggered by the subscription information update in response to determining that the second PR information includes the first indication value and the notification of subscription information update sent by the UDM is received. The AMF determines not to send the paging message triggered by the system update in response to determining that the second PR information includes the second indication value. For another example, the AMF determines to initiate the paging message triggered by the subscription information update and the policy parameter update in response to determining that the second PR information includes the first indication value and the notification of subscription information update sent by the UDM is received and a request message of the policy parameter update sent by the PCF is received. The AMF determines not to send the paging message triggered by the system update in response to determining that the second PR information includes the second indication value.

Here, the paging message triggered by the control plane signaling may be a paging message triggered by a voice service and/or a specific PDU session. For example, the AMF determines to initiate the paging message triggered by the voice service and/or the specific PDU session in response to determining that the second PR information includes the first indication value; determined not to initiate the paging message triggered by the voice service and the specific PDU session in response to determining that the second PR information includes the second indication value.

In another optional embodiment, the AMF determines whether to initiate the paging message triggered by the system update based on the second PR information and system signaling indication information.

For example, the AMF determines to initiate the paging message triggered by the voice service and/or the specific PDU session caused by the subscription information update in response to determining that the first indication value in the second PR information is received and the system signaling indication information indicates to receive the paging message triggered by the subscription information update, and determines to initiate no paging message triggered by the control plane signaling in response to determining that the second indication value included in the second PR information is received

Step S64: the AMF initiates the paging message.

In an optional embodiment, the AMF sends the paging message triggered by the control plane signaling to the RAN in response to determining to initiate the paging message triggered by the control plane signaling.

Here, the AMF may send the paging message to the base station of the RAN.

Step S65: the RAN sends the paging message.

In an optional embodiment, the base station of the RAN sends the paging message triggered by the control plane signaling to the UE.

An embodiment of the present disclosure can define a new PR information (second PR information), which is used to inform the network side whether the UE receives the paging message triggered by the control plane signaling, and can accurately determine whether to send the paging message triggered by the control plane signaling to the UE. In this way, on one hand, it may reduce a probability of an occurrence that service initiation is failed caused by using outdated or unupdated signaling or system parameters due to the UE missing the paging message triggered by the control plane signaling, so that the UE may obtain an updated signaling or system parameters in time, improve a success rate of service initiation; on the other hand, it may reduce a waste of power consumption of the UE to monitor the paging message triggered by the control plane signaling that is prepared to or ability to listen, which may save an energy consumption of the UE.

It should be noted that those skilled in the art can understand that any method provided in embodiments of the present disclosure may be executed independently, or together with some methods in embodiments of the present disclosure or some methods in related arts.

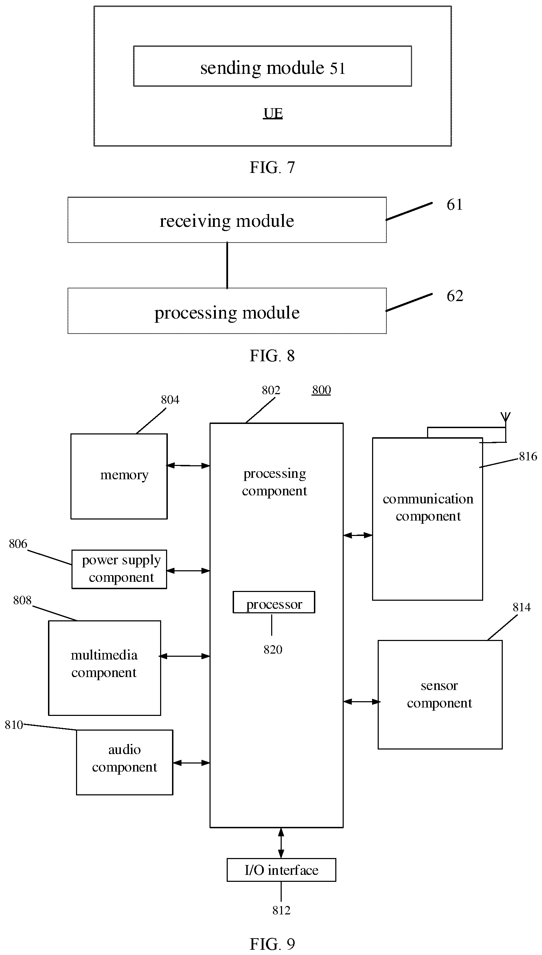

As illustrated in FIG. 7, an embodiment of the present disclosure provides an apparatus for paging restriction, applied to a UE. The apparatus includes:

a sending module 51, configured to send indication information indicating whether the UE receives a paging message triggered by a control plane signaling.

An embodiment of the present disclosure provides an apparatus for paging restriction, applied to a UE. The apparatus may include a sending module 51, configured to send indication information, the indication information indicating whether the UE has a willingness to receive the paging message triggered by the control plane signaling, or indicates whether the UE has an ability to receive the paging message triggered by the control plane signaling.

An embodiment of the present disclosure provides an apparatus for paging restriction, applied to a UE. The apparatus may include a sending module 51, configured to send indication information, the indication information including system signaling indication information; in which, the system signaling indication information indicates at least one of:
having a willingness to receive or having an unwillingness to receive a paging message triggered by a policy parameter update;
having an ability to receive or having an inability to receive the paging message triggered by the policy parameter update;
having a willingness to receive or having an unwillingness to receive a paging message triggered by a configuration parameter update;
having an ability to receive or having an inability to receive the paging message triggered by the configuration parameter update;
having a willingness to receive or having an unwillingness to receive a paging message triggered by a subscription information update; or
having an ability to receive or having an inability to receive the paging message triggered by the subscription information update.

An embodiment of the present disclosure provides an apparatus for paging restriction, applied to a UE. The apparatus may include a sending module 51, configured to send indication information, the indication information including first paging restriction (PR) information. The first PR information indicates that the UE has a willingness to receive or an ability to receive the paging message triggered by the control plane signaling.

An embodiment of the present disclosure provides an apparatus for paging restriction, applied to a UE. The apparatus may include a sending module 51, configured to send indication information, the indication information including first paging restriction (PR) information. The first PR information indicates at least one of:

having a willingness to receive or having an ability to receive a paging message triggered by a voice service;
having a willingness to receive or having an ability to receive a paging message triggered by a specific protocol data unit (PDU) session;
having a willingness to receive or having an ability to receive a paging message triggered by the voice service and the specific PDU session; or
having a willingness to receive or having an ability to receive a paging message indicated to be received by system signaling indication information.

In some embodiments, the paging message indicated to be received by the system signaling indication information may include at least one of:
a paging message triggered by a policy parameter update that is indicated to be willingness to receive or ability to receive by the system signaling indication information;
a paging message triggered by a configuration parameter update that is indicated to be willingness to receive or ability to receive by the system signaling indication information;
a paging message triggered by a subscription information update that is indicated to be willingness to receive or ability to receive by the system signaling indication information.

An embodiment of the present disclosure provides an apparatus for paging restriction, applied to a UE. The apparatus may include a sending module 51, configured to send indication information, the indication information including second PR information. The second PR information indicates whether the UE having a willingness to receive the paging message triggered by the control plane signaling, or indicates whether the UE has an ability to receive the paging message triggered by the control plane signaling.

An embodiment of the present disclosure provides an apparatus for paging restriction, applied to a UE. The apparatus may include a sending module 51, configured to send indication information, the indication information including second PR information. The second PR information indicates at least one of:
having a willingness to receive or having an unwillingness to receive all paging messages;
having an ability to receive or having an inability to receive all paging messages;
having a willingness to receive or having an unwillingness to receive a paging message triggered by a voice service;
having an ability to receive or having an inability to receive the paging message triggered by the voice service;
having a willingness to receive or having an unwillingness to receive a paging message triggered by a PDU session;
having an ability to receive or having an inability to receive the paging message triggered by the PDU session;
having a willingness to receive or having an unwillingness to receive a paging message triggered by the voice service and the PDU session;
having an ability to receive or having an inability to receive the paging message triggered by the voice service and the PDU session;
having a willingness to or having an ability to receive a paging message indicated to be received by system signaling indication information;
having an unwillingness to receive or having an inability to receive the paging message indicated not to be received by the system signaling indication information.

In some embodiments, the paging message indicated not to be received by the system signaling indication information may include at least one of:
a paging message triggered by a policy parameter update that is indicated to be unwillingness to receive or inability to receive by the system signaling indication information;
a paging message triggered by a configuration parameter update that is indicated to be unwillingness to receive or inability to receive by the system signaling indication information;
a paging message triggered by a subscription information update that is indicated to be unwillingness to receive or inability to receive by the system signaling indication information.

An embodiment of the present disclosure provides an apparatus for paging restriction, applied to a UE. The apparatus may include a sending module 51, configured to send indication information, the indication information including second PR information. The second PR information includes: a first indication value indicating a willingness to or an ability to receive the paging message triggered by the control plane signaling; or a second indication value indicating an unwillingness to or an inability to receive the paging message triggered by the control plane signaling.

An embodiment of the present disclosure provides an apparatus for paging restriction, applied to a UE. The apparatus may include the sending module 51 configured to send a registration request message carrying the indication information.

An embodiment of the present disclosure provides an apparatus for paging restriction, applied to a UE. The apparatus may include the sending module 51 configured to send a service request message carrying the indication information.

It needs to be noted that, those skilled in the art may understand that the apparatus provided in embodiments of the disclosure may be executed independently, or may be executed in combination with some apparatuses in embodiments of the disclosure or some apparatuses in the related art.

Regarding the apparatus in the above embodiments, the specific implementation in which each module performs operations have been described in detail in the relevant method embodiments, and will not be elaborated here.

As illustrated in FIG. 8, an embodiment of the present disclosure provides an apparatus for paging restriction, applied to a network device. The apparatus includes:
a receiving module 61, configured to receive indication information indicating whether a user equipment (UE) receives a paging message triggered by a control plane signaling; and
a processing module 62, configured to determine whether to initiate the paging message triggered by the control plane signaling based on the indication information.

In an embodiment, the network device includes an AMF.

An embodiment of the present disclosure provides an apparatus for paging restriction, applied to a network device. The apparatus includes a receiving module 61 configured to receive indication information, and the indication information indicates whether the UE has a willingness to receive the paging message triggered by the control plane signaling, or indicates whether the UE has an ability to receive the paging message triggered by the control plane signaling.

An embodiment of the present disclosure provides an apparatus for paging restriction, applied to a network device. The apparatus includes a receiving module 61 configured to receive indication information, and the indication information includes system signaling indication information.

An embodiment of the present disclosure provides an apparatus for paging restriction, applied to a network device. The apparatus may include a processing module 62 configured to determine to initiate the paging message triggered by the control plane signaling based on the system signaling indication information indicating the UE to receive the paging message triggered by the control plane signaling.

An embodiment of the present disclosure provides an apparatus for paging restriction, applied to a network device. The apparatus may include a processing module 62 configured to determine to initiate the paging message triggered by the control plane signaling based on the system signaling indication information indicating that the UE has a willingness to receive or has an ability to receive the paging message triggered by the control plane signaling.

An embodiment of the present disclosure provides an apparatus for paging restriction, applied to a network device. The apparatus may include a processing module 62 configured to determine to initiate no paging message triggered by the control plane signaling based on the system signaling indication information indicating the UE to receive no paging message triggered by the control plane signaling.

An embodiment of the present disclosure provides an apparatus for paging restriction, applied to a network device. The apparatus may include a processing module 62 configured to determine to initiate no paging message triggered by the control plane signaling based on the system signaling indication information indicating that the UE has an unwillingness to receive or has an inability to receive the paging message triggered by the control plane signaling.

An embodiment of the present disclosure provides an apparatus for paging restriction, applied to a network device. The apparatus may include a processing module 62 configured to determine to initiate a paging message triggered by a policy parameter update based on the system signaling indication information indicating that the UE has a willingness to receive or is has an ability to receive the paging message triggered by the policy parameter update.

An embodiment of the present disclosure provides an apparatus for paging restriction, applied to a network device. The apparatus may include a processing module 62 configured to determine to initiate no paging message triggered by the policy parameter update based on the system signaling indication information indicating that the UE has an unwillingness to receive or has an inability to receive the paging message triggered by the policy parameter update.

An embodiment of the present disclosure provides an apparatus for paging restriction, applied to a network device. The apparatus may include a processing module 62 configured to determine to initiate a paging message triggered by a configuration parameter update based on the system signaling indication information indicating that the UE has a willingness to receive or has an ability to receive the paging message triggered by the configuration parameter update.

An embodiment of the present disclosure provides an apparatus for paging restriction, applied to a network device. The apparatus may include a processing module 62 configured to determine to initiate no paging message triggered by the configuration parameter update based on the system signaling indication information indicating that the UE has an unwillingness to receive or has an inability to receive the paging message triggered by the configuration parameter update.

An embodiment of the present disclosure provides an apparatus for paging restriction, applied to a network device. The apparatus may include a processing module 62 configured to determine to initiate a paging message triggered by a subscription information update based on the system signaling indication information indicating that the UE has a willingness to receive or has an ability to receive the paging message triggered by the subscription information update.

An embodiment of the present disclosure provides an apparatus for paging restriction, applied to a network device. The apparatus may include a processing module 62 configured to determine to initiate no paging message triggered by the subscription information update based on the system signaling indication information indicating that the UE has an unwillingness to receive or has an inability to receive the paging message triggered by the subscription information update.

An embodiment of the present disclosure provides an apparatus for paging restriction, applied to a network device. The apparatus may include a processing module 62 configured to determine to initiate the paging message triggered by the control plane signaling based on the indication information comprising first paging restriction (PR) information.

An embodiment of the present disclosure provides an apparatus for paging restriction, applied to a network device. The apparatus may include a processing module 62 configured to determine to initiate no paging message triggered by the control plane signaling based on the indication information comprising no first PR information.

An embodiment of the present disclosure provides an apparatus for paging restriction, applied to a network device. The apparatus includes a receiving module 61 configured to receive indication information, and the indication information includes first PR information.

An embodiment of the present disclosure provides an apparatus for paging restriction, applied to a network device. The apparatus may include a processing module 62 configured to determine to initiate a paging message triggered by a voice service based on first PR information indicating a willingness to receive or an ability to receive the paging message triggered by the voice service.

An embodiment of the present disclosure provides an apparatus for paging restriction, applied to a network device. The apparatus may include a processing module 62 configured to determine to initiate a paging message triggered by a specific PDU session based on first PR information indicating a willingness to receive or an ability to receive the paging message triggered by the specific PDU session.

An embodiment of the present disclosure provides an apparatus for paging restriction, applied to a network device. The apparatus may include a processing module 62 configured to determine to initiate a paging message triggered by the voice service and the specific PDU session based on first PR information indicating a willingness to receive or an ability to receive the paging message triggered by the voice service and the specific PDU session.

An embodiment of the present disclosure provides an apparatus for paging restriction, applied to a network device. The apparatus includes a receiving module 61 configured to receive indication information, and the indication information includes second PR information.

An embodiment of the present disclosure provides an apparatus for paging restriction, applied to a network device. The apparatus may include a processing module 62 configured to determine to initiate the paging message triggered by the control plane signaling based on second PR information including a first indication value, in which the first indication value indicates that the UE receives the paging message triggered by the control plane signaling.

An embodiment of the present disclosure provides an apparatus for paging restriction, applied to a network device. The apparatus may include a processing module 62 configured to determine to initiate no paging message triggered by the control plane signaling based on the second PR information including a second indication value, in which the second indication value indicates that the UE receives no paging message triggered by the control plane signaling.

An embodiment of the present disclosure provides an apparatus for paging restriction, applied to a network device. The apparatus may include a processing module 62 configured to determine to initiate a paging message that is a paging message triggered by a voice service based on second PR information indicating a willingness to receive or an ability to receive the paging message triggered by the voice service.

An embodiment of the present disclosure provides an apparatus for paging restriction, applied to a network device. The apparatus may include a processing module 62 configured to determine to initiate no paging message that is the paging message triggered by the voice service based on second PR information indicating an unwillingness to receive or an inability to receive the paging message that is the paging message triggered by the voice service.

An embodiment of the present disclosure provides an apparatus for paging restriction, applied to a network device. The apparatus may include a processing module 62 configured to determine to initiate a paging message triggered by a PDU session based on second PR information indicating a willingness to receive or an ability to receive the paging message triggered by a specific PDU session.

An embodiment of the present disclosure provides an apparatus for paging restriction, applied to a network device. The apparatus may include a processing module 62 configured to determine to initiate no paging message triggered by the PDU session based on second PR information indicating an unwillingness to receive or an inability to receive the paging message triggered by the PDU session.

An embodiment of the present disclosure provides an apparatus for paging restriction, applied to a network device. The apparatus may include a processing module 62 configured to determine to initiate a paging message triggered by the voice service and the specific PDU session based on second PR information indicating a willingness to receive or an ability to receive the paging message triggered by the voice service and the specific PDU session.

An embodiment of the present disclosure provides an apparatus for paging restriction, applied to a network device. The apparatus may include a processing module 62 configured to determine to initiate no paging message triggered by the voice service and the specific PDU session based on second PR information indicating an unwillingness to receive or an inability to receive the paging message triggered by the voice service and the specific PDU session.

An embodiment of the present disclosure provides an apparatus for paging restriction, applied to a network device. The apparatus may include a processing module 62 configured to determine to initiate a paging message indicated to be received by the system signaling indication information based on second PR information indicating a willingness to receive or an ability to receive the paging message indicated to be received by the system signaling indication information.

An embodiment of the present disclosure provides an apparatus for paging restriction, applied to a network device. The apparatus may include a processing module 62 configured to determine to initiate no paging message indicated not to be received by the system signaling indication information based on second PR information indicating an unwillingness to receive or an inability to receive the paging message indicated not to be received by the system signaling indication information.

An embodiment of the present disclosure provides an apparatus for paging restriction, applied to a network device. The apparatus may include a processing module 62 configured to receive a registration request message carrying the indication information.

An embodiment of the present disclosure provides an apparatus for paging restriction, applied to a network device. The apparatus may include a processing module 62 configured to receive a service request message carrying the indication information.

It needs to be noted that, those skilled in the art may understand that the apparatus provided in embodiments of the disclosure may be executed independently, or may be executed in combination with some apparatuses in embodiments of the disclosure or some apparatuses in the related art.

Regarding the apparatus in the above embodiments, the specific implementation in which each module performs operations have been described in detail in the relevant method embodiments, and will not be elaborated here.

A communication device is provided according to embodiments of the disclosure, and includes:
a processor; and
a memory for storing processor executable instructions;
the processor is configured to: implement the method described in the above any embodiment when running the executable instructions.

In an embodiment, the communication device may include but is not limited to at least one of: a UE and a network device. Here, the network device may include a core network device or an access network device, etc. Here, the access network device may include a base station; the core network device may include an AMF.

The processor may include various types of storage mediums. The storage medium is a non-transitory computer storage medium, and may continue memorizing and storing information thereon when a communication device is powered off.

The processor is connected to a memory via a bus, and may be configured to read an executable program stored on the memory, for example, at least one of the methods shown in FIGs. 2 to 6.

A computer storage medium storing a computer executable program is further provided according to embodiments of the present disclosure. When the executable program is executed by a processor, the method for paging restriction as described in the above any embodiment is implemented, for example, at least one of the methods shown in FIGs. 2 to 6.

With regards to the device or the storage medium in the above embodiments, the specific way in which each module performs the operation has been described in method embodiments and will not be elaborated here.

As illustrated in FIG. 9, a block diagram illustrating a user equipment (UE) 800 is provided according to an example embodiment. For example, the user equipment 800 may be a mobile phone, a computer, a digital broadcasting terminal, a messaging device, a game console, a tablet device, a medical device, a fitness equipment, a personal digital assistant, etc.

As illustrated in FIG. 9, the user equipment 800 may include one or more components: a processing component 802, a memory 804, a power supply component 806, a multimedia component 808, an audio component 810, an input/output (I/O) interface 812, a sensor component 814, and a communication component 816.

The processing component 802 generally controls an entire operation of the user equipment 800, such as operations related to display, phone call, data communication, camera operation and recording operation. The processing component 802 may include one or more processors 820 to perform instructions, to complete all or part of steps of the above method. In addition, the processing component 802 may include one or more modules for the convenience of interaction between the processing component 802 and other components. For example, the processing unit 802 may include a multimedia module for the convenience of interaction between the multimedia component 808 and the processing component 802.

The memory 804 is configured to store all types of data to support the operation of the user equipment 800. Examples of the data include the instructions of any applications or methods operated on the user equipment 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 806 may provide power supply for all units of the user equipment 800. The power supply component 806 may include a power supply management system, one or more power supplies, and other units related to generating, managing and distributing power for the user equipment 800.

The multimedia component 808 includes an output interface screen provided between the user equipment 800 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense a boundary of a touch or slide action, but also detect a duration and pressure related to the touch or slide operation. In some embodiments, the multimedia component 808 includes a front camera and/or a rear camera. When the user equipment 800 is in operation mode, such as shooting mode or video mode, the front camera or the rear camera may receive the external multimedia data. Every front camera and rear camera may be a fixed optical lens system or an optical lens system with focal length and optical zoom capacity.

The audio component 810 is configured as an output and/or input signal. For example, the audio component 810 includes a microphone (MIC). When the user equipment 800 is in operation mode, such as call mode, record mode, and speech recognition mode, the microphone is configured to receive external audio signals. The audio signals received may be further stored in the memory 804 or sent via the communication units 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the user equipment 800. For example, the sensor component 814 may detect the on/off state of the user equipment 800 and the relative positioning of the component. For example, the component is the display and the keypad of the user equipment 800, the sensor component 814 may also detect the location change of the user equipment 800 or one component of the user equipment 800, the presence or absence of contact between the user and the user equipment 800, the orientation or acceleration/deceleration of the user equipment 800, and the temperature change of the user equipment 800. The sensor component 814 may include a proximity sensor, which is configured to detect presence of the objects nearby without any physical contact. The sensor component 814 may further include a light sensor such as a CMOS or CCD image sensor, which is configured to use in imaging applications. In some embodiments, the sensor units 814 may further include an acceleration transducer, a gyroscope sensor, a magnetic sensor, a pressure sensor or a temperature sensor.

The communication component 816 may be configured for the convenience of wired or wireless communication between the user equipment 800 and other devices. The user equipment 800 may access wireless networks based on a communication standard, such as Wi-Fi, 2G or 3G, or their combination. In an exemplary embodiment, the communication component 816 receives broadcast signals or broadcast-related information from an external broadcast management system via a broadcast channel. In an example embodiment, the communication component 816 further includes a near field communication (NFC) module to facilitate short-range communication. For example, the NFC module may be implemented based on a radio frequency identification (RFID) technology, an infrared data association (IRDA) technology, an ultra-wideband (UWB) technology, Bluetooth (BT) technology and other technologies.

In an example embodiment, the user equipment 800 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, such as the memory 804 including instructions, and the instructions may be executed by the processor 820 of the user equipment 800 to complete the above method. For example, the non-transitory computer readable storage medium may be a ROM, a random-access memory (RAM), a CD-ROM, a magnetic tape, a floppy disk, an optical data storage device, etc.

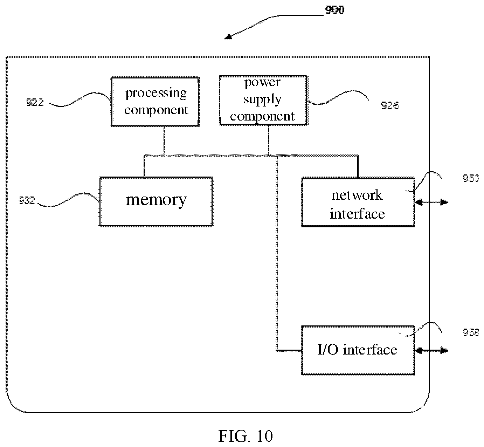

FIG. 10 illustrates a structure of a base station according to an embodiment of the disclosure. For example, a base station 900 may be provided as a network side server. As illustrated in FIG. 10, the base station 900 includes a processing component 922, which further includes one or more processors, and memory resources represented by a memory 932, which are configured to store instructions executable by the processing component 922, for example, an application. The application stored in the memory 932 may include one or more modules each of which corresponds to a set of instructions. In addition, the processing component 922 is configured to execute instructions, to perform any one method applied to the base station as described in the above method, for example, the method as illustrated in FIGs. 4 to 10.

The base station 900 may further include one power supply component 926 configured to execute power management of the base station 900, one wired or wireless network interface 950 configured to connect the base station 900 to a network, and one input/output(I/O) interface 958. The base station 900 may operate an operating system stored in the memory 932, for example, Windows Server TM, Mac OS XTM, UnixTM, LinuxTM, FreeBSDTM or similar.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for paging restriction, performed by a user equipment (UE), comprising:
sending indication information indicating whether the UE receives a paging message triggered by a control plane signaling.

2. The method according to claim 1, wherein the indication information indicates whether the UE has a willingness to receive the paging message triggered by the control plane signaling, or indicates whether the UE has an ability to receive the paging message triggered by the control plane signaling.

3. The method according to claim 1 or 2, wherein the indication information comprises:
system signaling indication information; wherein the system signaling indication information indicates at least one of:
having a willingness to receive or having an unwillingness to receive a paging message triggered by a policy parameter update;
having an ability to receive or having an inability to receive the paging message triggered by the policy parameter update;
having a willingness to receive or having an unwillingness to receive a paging message triggered by a configuration parameter update;
having an ability to receive or having an inability to receive the paging message triggered by the configuration parameter update;
having a willingness to receive or having an unwillingness to receive a paging message triggered by a subscription information update; or
having an ability to receive or having an inability to receive the paging message triggered by the subscription information update.

4. The method according to claim 1 or 3, wherein the indication information comprises first paging restriction (PR) information; wherein the first PR information indicates that the UE has a willingness to receive or an ability to receive the paging message triggered by the control plane signaling.

5. The method according to claim 4, wherein the first PR information indicates at least one of:
having a willingness to receive or having an ability to receive a paging message triggered by a voice service;
having a willingness to receive or having an ability to receive a paging message triggered by a specific protocol data unit (PDU) session;
having a willingness to receive or having an ability to receive a paging message triggered by the voice service and the specific PDU session; or
having a willingness to receive or having an ability to receive a paging message indicated to be received by system signaling indication information.

6. The method according to claim 1 or 3, wherein the indication information comprises second PR information; wherein the second PR information indicates whether the UE has a willingness to receive the paging message triggered by the control plane signaling, or indicates whether the UE has an ability to receive the paging message triggered by the control plane signaling.

7. The method according to claim 6, wherein the second PR information indicates at least one of:
having a willingness to receive or having an unwillingness to receive all paging messages; having an ability to receive or having an inability to receive all paging messages;
having a willingness to receive or having an unwillingness to receive a paging message triggered by a voice service;
having an ability to receive or having an inability to receive the paging message triggered by the voice service;
having a willingness to receive or having an unwillingness to receive a paging message triggered by a PDU session;
having an ability to receive or having an inability to receive the paging message triggered by the PDU session;
having a willingness to receive or having an unwillingness to receive a paging message triggered by the voice service and the PDU session;
having an ability to receive or having an inability to receive the paging message triggered by the voice service and the PDU session;
having a willingness to or having an ability to receive a paging message indicated to be received by system signaling indication information; or
having an unwillingness to receive or having an inability to receive the paging message indicated not to be received by the system signaling indication information.

8. The method according to claim 6, wherein the second PR information comprises:
a first indication value indicating a willingness to or an ability to receive the paging message triggered by the control plane signaling;
or,
a second indication value indicating an unwillingness to or an inability to receive the paging message triggered by the control plane signaling.

9. The method according to claim 1, wherein sending the indication information comprises:
sending a registration request message carrying the indication information;
or,
sending a service request message carrying the indication information.

10. A method for paging restriction, performed by a network device, comprising:
receiving indication information indicating whether a user equipment (UE) receives a paging message triggered by a control plane signaling; and
determining whether to initiate the paging message triggered by the control plane signaling based on the indication information.

11. The method according to claim 10, wherein the indication information indicates whether the UE has a willingness to receive the paging message triggered by the control plane signaling, or indicates whether the UE has an ability to receive the paging message triggered by the control plane signaling.

12. The method according to claim 10 or 11, wherein the indication information comprises system signaling indication information;
determining whether to initiate the paging message triggered by the control plane signaling based on the indication information comprises one of:
determining to initiate the paging message triggered by the control plane signaling based on the system signaling indication information indicating that the UE has a willingness to receive or has an ability to receive the paging message triggered by the control plane signaling; or
determining to initiate no paging message triggered by the control plane signaling based on the system signaling indication information indicating that the UE has an unwillingness to receive or has an inability to receive the paging message triggered by the control plane signaling.

13. The method according to claim 10 or 11, wherein the indication information comprises system signaling indication information;
determining whether to initiate the paging message triggered by the control plane signaling based on the indication information comprises at least one of:
determining to initiate a paging message triggered by a policy parameter update based on the system signaling indication information indicating that the UE has a willingness to receive or is has an ability to receive the paging message triggered by the policy parameter update;
determining to initiate no paging message triggered by the policy parameter update based on the system signaling indication information indicating that the UE has an unwillingness to receive or has an inability to receive the paging message triggered by the policy parameter update;
determining to initiate a paging message triggered by a configuration parameter update based on the system signaling indication information indicating that the UE has a willingness to receive or has an ability to receive the paging message triggered by the configuration parameter update;
determining to initiate no paging message triggered by the configuration parameter update based on the system signaling indication information indicating that the UE has an unwillingness to receive or has an inability to receive the paging message triggered by the configuration parameter update;
determining to initiate a paging message triggered by a subscription information update based on the system signaling indication information indicating that the UE has a willingness to receive or has an ability to receive the paging message triggered by the subscription information update; or
determining to initiate no paging message triggered by the subscription information update based on the system signaling indication information indicating that the UE has an unwillingness to receive or has an inability to receive the paging message triggered by the subscription information update.

14. The method according to claim 10 or 13, wherein determining whether to initiate the paging message triggered by the control plane signaling based on the indication information comprises one of:
determining to initiate the paging message triggered by the control plane signaling based on the indication information comprising first paging restriction (PR) information; or
determining to initiate no paging message triggered by the control plane signaling based on the indication information comprising no first PR information.

15. The method according to claim 10 or 13, wherein the indication information comprises first PR information;
determining whether to initiate the paging message triggered by the control plane signaling based on the indication information comprises at least one of:
determining to initiate a paging message triggered by a voice service based on first PR information indicating a willingness to receive or an ability to receive the paging message triggered by the voice service;
determining to initiate a paging message triggered by a specific PDU session based on first PR information indicating a willingness to receive or an ability to receive the paging message triggered by the specific PDU session; or
determining to initiate a paging message triggered by the voice service and the specific PDU session based on first PR information indicating a willingness to receive or an ability to receive the paging message triggered by the voice service and the specific PDU session.

16. The method according to claim 10 or 13, wherein the indication information comprises second PR information;
determining whether to initiate the paging message triggered by the control plane signaling based on the indication information comprises one of:
determining to initiate the paging message triggered by the control plane signaling based on second PR information comprising a first indication value, wherein the first indication value indicates that the UE receives the paging message triggered by the control plane signaling; or
determining to initiate no paging message triggered by the control plane signaling based on the second PR information comprising a second indication value, wherein the second indication value indicates that the UE receives no paging message triggered by the control plane signaling.

17. The method according to claim 10 or 13, wherein the indication information comprises second PR information;
determining whether to initiate the paging message triggered by the control plane signaling based on the indication information comprises at least one of:
determining to initiate a paging message that is a paging message triggered by a voice service based on second PR information indicating a willingness to receive or an ability to receive the paging message triggered by the voice service;
determining to initiate no paging message that is the paging message triggered by the voice service based on second PR information indicating an unwillingness to receive or an inability to receive the paging message that is the paging message triggered by the voice service;
determining to initiate a paging message triggered by a PDU session based on second PR information indicating a willingness to receive or an ability to receive the paging message triggered by a specific PDU session;
determining to initiate no paging message triggered by the PDU session based on second PR information indicating an unwillingness to receive or an inability to receive the paging message triggered by the PDU session;
determining to initiate a paging message triggered by the voice service and the specific PDU session based on second PR information indicating a willingness to receive or an ability to receive the paging message triggered by the voice service and the specific PDU session;
determining to initiate no paging message triggered by the voice service and the specific PDU session based on second PR information indicating an unwillingness to receive or an inability to receive the paging message triggered by the voice service and the specific PDU session;
determining to initiate a paging message indicated to be received by the system signaling indication information based on second PR information indicating a willingness to receive or an ability to receive the paging message indicated to be received by the system signaling indication information; or
determining to initiate no paging message indicated not to be received by the system signaling indication information based on second PR information indicating an unwillingness to receive or an inability to receive the paging message indicated not to be received by the system signaling indication information.

18. The method according to claim 10, wherein receiving the indication information comprises:
receiving a registration request message carrying the indication information;
or,
receiving a service request message carrying the indication information.

19. The method according to claim 10, wherein the network device comprises an access and mobility management function (AMF).

20. An apparatus for paging restriction, applied to a user equipment (UE), comprising:
a sending module, configured to send indication information indicating whether the UE receives a paging message triggered by a control plane signaling.

21. The apparatus according to claim 20, wherein the indication information indicates whether the UE has a willingness to receive the paging message triggered by the control plane signaling, or indicates whether the UE has an ability to receive the paging message triggered by the control plane signaling.

22. The apparatus according to claim 20 or 21, wherein the indication information comprises: system signaling indication information; wherein the system signaling indication information indicates at least one of:
having a willingness to receive or having an unwillingness to receive a paging message triggered by a policy parameter update;
having an ability to receive or having an inability to receive the paging message triggered by the policy parameter update;
having a willingness to receive or having an unwillingness to receive a paging message triggered by a configuration parameter update;
having an ability to receive or having an inability to receive the paging message triggered by the configuration parameter update;
having a willingness to receive or having an unwillingness to receive a paging message triggered by a subscription information update; or
having an ability to receive or having an inability to receive the paging message triggered by the subscription information update.

23. The apparatus according to claim 20 or 21, wherein the indication information comprises first paging restriction (PR) information; wherein the first PR information indicates that the UE has a willingness to receive or an ability to receive the paging message triggered by the control plane signaling.

24. The apparatus according to claim 23, wherein the first PR information indicates at least one of:
having a willingness to receive or having an ability to receive a paging message triggered by a voice service;
having a willingness to receive or having an ability to receive a paging message triggered by a specific protocol data unit (PDU) session;
having a willingness to receive or having an ability to receive a paging message triggered by the voice service and the specific PDU session; or
having a willingness to receive or having an ability to receive a paging message indicated to be received by system signaling indication information.

25. The apparatus according to claim 20 or 21, wherein the indication information comprises second PR information; wherein the second PR information indicates whether the UE having a willingness to receive the paging message triggered by the control plane signaling, or indicates whether the UE has an ability to receive the paging message triggered by the control plane signaling.

26. The apparatus according to claim 25, wherein the second PR information indicates at least one of:
having a willingness to receive or having an unwillingness to receive all paging messages;
having an ability to receive or having an inability to receive all paging messages;
having a willingness to receive or having an unwillingness to receive a paging message triggered by a voice service;
having an ability to receive or having an inability to receive the paging message triggered by the voice service;
having a willingness to receive or having an unwillingness to receive a paging message triggered by a PDU session;
having an ability to receive or having an inability to receive the paging message triggered by the PDU session;
having a willingness to receive or having an unwillingness to receive a paging message triggered by the voice service and the PDU session;
having an ability to receive or having an inability to receive the paging message triggered by the voice service and the PDU session;
having a willingness to or having an ability to receive a paging message indicated to be received by system signaling indication information; or
having an unwillingness to receive or having an inability to receive the paging message indicated not to be received by the system signaling indication information.

27. The apparatus according to claim 25, wherein the second PR information comprises:
a first indication value indicating a willingness to or an ability to receive the paging message triggered by the control plane signaling;
or,
a second indication value indicating an unwillingness to or an inability to receive the paging message triggered by the control plane signaling.

28. The apparatus according to claim 20, wherein,
the sending module is configured to send a registration request message carrying the indication information;
or,
the sending module is configured to send a service request message carrying the indication information.

29. An apparatus for paging restriction, applied to a network device, comprising:
a receiving module, configured to receive indication information indicating whether a user equipment (UE) receives a paging message triggered by a control plane signaling; and
a processing module, configured to determine whether to initiate the paging message triggered by the control plane signaling based on the indication information.

30. The apparatus according to claim 29, wherein the indication information indicates whether the UE has a willingness to receive the paging message triggered by the control plane signaling, or indicates whether the UE has an ability to receive the paging message triggered by the control plane signaling.

31. The apparatus according to claim 29 or 30, wherein the indication information comprises system signaling indication information;
the processing module is configured to determine to initiate the paging message triggered by the control plane signaling based on the system signaling indication information indicating that the UE has a willingness to receive or has an ability to receive the paging message triggered by the control plane signaling; or
the processing module is configured to determine to initiate no paging message triggered by the control plane signaling based on the system signaling indication information indicating that the UE has an unwillingness to receive or has an inability to receive the paging message triggered by the control plane signaling.

32. The apparatus according to claim 29 or 30, wherein the indication information comprises system signaling indication information;
the processing module is configured to perform at least one of:
determining to initiate a paging message triggered by a policy parameter update based on the system signaling indication information indicating that the UE has a willingness to receive or is has an ability to receive the paging message triggered by the policy parameter update;
determining to initiate no paging message triggered by the policy parameter update based on the system signaling indication information indicating that the UE has an unwillingness to receive or has an inability to receive the paging message triggered by the policy parameter update;
determining to initiate a paging message triggered by a configuration parameter update based on the system signaling indication information indicating that the UE has a willingness to receive or has an ability to receive the paging message triggered by the configuration parameter update;
determining to initiate no paging message triggered by the configuration parameter update based on the system signaling indication information indicating that the UE has an unwillingness to receive or has an inability to receive the paging message triggered by the configuration parameter update;
determining to initiate a paging message triggered by a subscription information update based on the system signaling indication information indicating that the UE has a willingness to receive or has an ability to receive the paging message triggered by the subscription information update; or
determining to initiate no paging message triggered by the subscription information update based on the system signaling indication information indicating that the UE has an unwillingness to receive or has an inability to receive the paging message triggered by the subscription parameter update.

33. The apparatus according to claim 29 or 32, wherein,
the processing module is configured to determine to initiate the paging message triggered by the control plane signaling based on the indication information comprising first paging restriction (PR) information; or
the processing module is configured to determine to initiate no paging message triggered by the control plane signaling based on the indication information comprising no first PR information.

34. The apparatus according to claim 29 or 32, wherein the indication information comprises first PR information;
the processing module is configured to perform at least one of:
determining to initiate a paging message triggered by a voice service based on first PR information indicating a willingness to receive or an ability to receive the paging message triggered by the voice service;
determining to initiate a paging message triggered by a specific PDU session based on first PR information indicating a willingness to receive or an ability to receive the paging message triggered by the specific PDU session; or
determining to initiate a paging message triggered by the voice service and the specific PDU session based on first PR information indicating a willingness to receive or an ability to receive the paging message triggered by the voice service and the specific PDU session.

35. The apparatus according to claim 29 or 32, wherein the indication information comprises second PR information;
the processed module is configured to determine to initiate the paging message triggered by the control plane signaling based on second PR information comprising a first indication value, wherein the first indication value indicates that the UE receives the paging message triggered by the control plane signaling; or
the processed module is configured to determine to initiate no paging message triggered by the control plane signaling based on the second PR information comprising a second indication value, wherein the second indication value indicates that the UE receives no paging message triggered by the control plane signaling.

36. The apparatus according to claim 29 or 32, wherein the indication information comprises second PR information;
the processing module is configured to perform at least one of:
determining to initiate a paging message that is a paging message triggered by a voice service based on second PR information indicating a willingness to receive or an ability to receive the paging message triggered by the voice service;
determining to initiate no paging message that is the paging message triggered by the voice service based on second PR information indicating an unwillingness to receive or an inability to receive the paging message that is the paging message triggered by the voice service;
determining to initiate a paging message triggered by a PDU session based on second PR information indicating a willingness to receive or an ability to receive the paging message triggered by a specific PDU session;
determining to initiate no paging message triggered by the PDU session based on second PR information indicating an unwillingness to receive or an inability to receive the paging message triggered by the PDU session;
determining to initiate a paging message triggered by the voice service and the specific PDU session based on second PR information indicating a willingness to receive or an ability to receive the paging message triggered by the voice service and the specific PDU session;
determining to initiate no paging message triggered by the voice service and the specific PDU session based on second PR information indicating an unwillingness to receive or an inability to receive the paging message triggered by the voice service and the specific PDU session;
determining to initiate a paging message indicated to be received by the system signaling indication information based on second PR information indicating a willingness to receive or an ability to receive the paging message indicated to be received by the system signaling indication information; or
determining to initiate no paging message indicated not to be received by the system signaling indication information based on second PR information indicating an unwillingness to receive or an inability to receive the paging message indicated not to be received by the system signaling indication information.

37. The apparatus according to claim 29, wherein,
the processing module is configured to receive a registration request message carrying the indication information; or,
the processing module is configured to receive a service request message carrying the indication information.

38. The apparatus according to claim 29, wherein the network device comprises an access and mobility management function (AMF).

39. A communication device, comprising:
a processor; and
a memory for storing instructions executable by the processor;
wherein the processor is configured to implement a method for UE paging restriction according to any one of claims 1 to 9 or claims 10 to 19 when running the executable instructions.

40. A computer storage medium, wherein the computer storage medium stores a computer executable program, and when the executable program is executed by a processor, the method for paging restriction according to any one of claims 1 to 9 or claims 10 to 19 is implemented.
